# EUROPÄISCHE PATENTANMELDUNG

(11) **EP 4 799 807 A1**
(43) Veröffentlichungstag der Anmeldung: **02.09.2026**
(21) Anmeldenummer: 25160734.7
(22) Anmeldetag: 27.02.2025
(51) Int. Cl.: B32B 7/14, B32B 3/26, B32B 27/10, B32B 29/00, B32B 29/06

(54) **EINSCHLAGPAPIER FÜR LEBENSMITTEL**

(71) Anmelder: Schropp GmbH & Co. KG, 74172 Neckarsulm (DE)
(72) Erfinder: Schropp, Sven, 74172 Neckarsulm (DE)
(74) Vertreter: Schulz Junghans Patentanwälte PartGmbB

(57) **Zusammenfassung**

Die Erfindung betrifft ein Einschlagpapier (10) für Lebensmittel mit einer Papierschicht und mit einer Kunststoff-Folie, die lediglich bereichsweise über Klebestellen (40, 42) an der Papierschicht befestigt ist. Erfindungsgemäß weist die Papierschicht (20) eine Grammatur von weniger als 30 g/m² auf, insbesondere eine Grammatur von etwa 22 g/m². Die Kunststoff-Folie weist eine Stärke von weniger als 6 µm auf, insbesondere eine Stärke von etwa 4 µm. Vorzugsweise können Klebestellen (40) entlang des Randbereichs (44) des Einschlagpapiers (10) angeordnet sein. Im mittleren Bereich (46) des Einschlagpapiers (10) können weitere Klebestellen (42) vorhanden sein, die in einem sich wiederholenden Gittermuster angeordnet sind, so dass sich im mittleren Bereich (46) des Einschlagpapiers (10) Leerräume (54) ohne Klebestellen (40, 42) bilden.

## Beschreibung

### TECHNISCHES GEBIET

Die Erfindung betrifft ein Einschlagpapier für Lebensmittel. Derartige Einschlagpapiere dienen der Verpackung von losen Lebensmitteln, die an einer Frische-Theke oder einer Bedientheke verkauft werden. Insbesondere feuchte oder fettende Lebensmittel - beispielsweise Fleischwaren, Wurstwaren oder Käse - werden zunächst in das Einschlagpapier eingewickelt, bevor die so verpackten Lebensmittel dem Endkunden in einer Tüte oder einem Beutel gereicht werden.

### STAND DER TECHNIK

Bei dem am häufigsten eingesetzten Einschlagpapier handelt es sich um ein Verbundmaterial aus einem mit Plastik beschichteten Papier. Papier und Plastik sind in diesem Fall fest miteinander verbunden. Die Plastikschicht tritt dabei in Kontakt mit dem Lebensmittel. Durch die Materialkombination aus Plastik und Papier handelt es sich um ein Verbundmaterial, das nicht sortenrein entsorgt werden kann. Somit ist das Einschlagpapier nicht recyclefähig, muss im Restmüll entsorgt werden und ist daher umweltschädlich und nicht mehr zeitgemäß.

Daher wird vermehrt ein Einschlagpapier aus einer Papierschicht und einer Plastikfolie verwendet, bei dem die Papierschicht nicht mehr vollflächig mit der Plastikfolie verklebt ist. Vielmehr wird die Plastikfolie lediglich punktuell an der Papierschicht befestigt. Grundsätzlich wäre es bei diesem Einschlagpapier möglich, die Plastikfolie von der Papierschicht zu trennen und die beiden Materialien sortenrein zu sammeln und zu recyceln. Aufgrund der mangelnden Kennzeichnung zur angedachten Entsorgung und der schlechten Abziehbarkeit der Plastikfolie wird das Einschlagpapier jedoch in der Regel dennoch im Restmüll entsorgt.

Die Verwendung von Plastikfolie in einem Massenprodukt, das lediglich für einen zeitlich kurzen Gebrauch gedacht ist und anschließend entsorgt werden muss, führt zu schweren Umweltbelastungen. Daher wurden wiederholt Versuche mit plastikfreien Materialkombinationen gemacht. So ist aus der DE 10 2020 001 625 A1 ist ein Einschlagpapier für Lebensmittel bekannt, das ohne fossile Rohstoffe auskommt. Das dort offenbarte Einschlagpapier besitzt eine hydrophobe Papierschicht, die auf zumindest einer Seite mit einer Wachsschicht oder Lackschicht versehen ist. Die Herstellung derartiger Einschlagpapiere ist jedoch teurer als die herkömmlicher Einschlagpapiere, so dass sich die mit einer Wachsschicht versehenen Einschlagpapiere am Markt noch nicht durchsetzen konnten.

### DARSTELLUNG DER ERFINDUNG

Ausgehend von diesem vorbekannten Stand der Technik liegt der Erfindung die Aufgabe zugrunde, ein verbessertes Einschlagpapier für Lebensmittel anzugeben, das den Ressourcenverbrauch fossiler und natürlicher Rohstoffe reduziert und einen möglichst geringen CO₂-Fußabdruck aufweist.

Das erfindungsgemäße Einschlagpapier ist durch die Merkmale des Hauptanspruchs 1 gegeben. Sinnvolle Weiterbildungen der Erfindung sind Gegenstand von sich an diesen Anspruch anschließenden weiteren Ansprüchen.

Das erfindungsgemäße Einschlagpapier besitzt eine Papierschicht und eine Kunststoff-Folie, die lediglich bereichsweise über Klebestellen an der Papierschicht befestigt ist. Erfindungsgemäß weist die Papierschicht eine Grammatur von weniger als 30 g/m² auf, insbesondere eine Grammatur von etwa 22 g/m². Die Kunststoff-Folie weist erfindungsgemäß eine Stärke von weniger als 6 µm auf, insbesondere eine Stärke von etwa 4 µm. Durch die Verwendung einer deutlich gewichtsreduzierten Papierschicht und Kunststoff-Folie ergibt sich eine besonders nachhaltige und ressourcenschonende Materialkombination.

Ein derartiges Einschlagpapier hat daher einen deutlich geringeren CO₂-Fußab-druck als bestehende Einschlagpapiere. Das erfindungsgemäße Einschlagpapier folgt daher dem Leitsatz für umweltfreundliche Produkte: "Auch Produkte haben einen CO₂-Fußabdruck, der die Summe der Emissionen umfasst, die durch die Herstellung, die Nutzung sowie durch die Verwertung und Entsorgung des jeweiligen Produktes entstehen."

Vorzugsweise können die Klebestellen entlang des Randbereichs des Einschlagpapiers angeordnet sein. Darüber hinaus können im mittleren Bereich des Einschlagpapiers weitere Klebestellen vorhanden sein, die in einem sich wiederholenden Gittermuster angeordnet sind, so dass sich im mittleren Bereich des Einschlagpapiers Leerräume ohne Klebestellen bilden.

Bislang waren die Klebestellen in einem wiederkehrenden Rapport angeordnet, wobei der Abstand zwischen benachbarten Klebestellen in alle Richtungen jeweils etwa konstant war. Derartige Klebestellen lassen sich beispielsweise über eine Platte, eine Walze oder ein Sprühverfahren gleichmäßig auftragen. Dabei sind jedoch möglichst eng benachbarte Klebestellen notwendig, um ein unbeabsichtigtes Lösen der Kunststoff-Folie im Randbereich zu vermeiden. Insgesamt war daher ein hoher Klebstoffverbrauch erforderlich.

Durch die erfindungsgemäße Anordnung der Klebestellen kann einerseits der Randbereich des Einschlagpapiers sicher verklebt werden, so dass ein unbeabsichtigtes Lösen der Kunststoff-Folie vermieden werden kann. Gleichzeitig bilden sich im mittleren Bereich des Einschlagspapier größere Leerräume, bei denen im Vergleich zu den herkömmlichen Klebeanordnungen mehrere potentielle Klebestellen fehlen. Durch diese unverklebten Stellen kann der Klebstoffverbrauch reduziert werden. Darüber hinaus kann das beabsichtigte Lösen der Kunststoff-Folie zum getrennten Recyceln deutlich vereinfacht werden, so dass eine höhere Recycling-Quote erreicht werden kann.

Beispielsweise können die Klebestellen im mittleren Bereich des Einschlagpapiers reihen- beziehungsweise spaltenförmig angeordnet sein, so dass sich rechteckige Leerräume im mittleren Bereich des Einschlagpapiers ergeben. Alternativ dazu können die Klebestellen im mittleren Bereich so angeordnet sein, dass sich sechseckige Leerräume im mittleren Bereich des Einschlagpapiers bilden. Auch weitere, alternative gitterförmige Muster an Klebestellen sind grundsätzlich denkbar.

In einer bevorzugten Ausführungsform kann die Papierschicht im mittleren Bereich zumindest eine Aussparung aufweisen, die im Bereich zumindest einer der Leerräume angeordnet ist. Bislang war die Papierschicht jeweils durchgehend vorhanden und bildete eine nahezu undurchsichtige Lage. Der mit dem Einschlagpapier eingewickelte Inhalt konnte daher nur durch ein Aufpacken des Einschlagpapiers erkennbar gemacht werden. Dies ist weniger hygienisch, da durch ein mehrfaches Ein- und Auspacken des Inhalts die Gefahr einer Kontamination des Inhalts steigt. Darüber hinaus war dies für den Endkunden umständlich und daher wenig nutzerfreundlich. Durch die zumindest eine Aussparung in der Papierschicht kann der Inhalt nunmehr auch im verpackten Zustand sichtbar sein, was für den Endkunden deutlich angenehmer ist. Darüber hinaus kann durch die Ausbildung zumindest einer Aussparung das Produktgewicht des Einschlagpapiers deutlich reduziert werden. Dies reduziert dann auch die fälligen Abgaben für die Entsorgung und die Herstellung des Einwegkunststoffprodukts. Die aus der Papierfolie entfernten Aussparungen können beispielsweise bei der beliefernden Papiermühle als Rohstoff zurückgegeben werden. Somit ist eine Wiederverwertung der Papierausschnitte möglich und es können zusätzliche Ressourcen geschont werden.

Vorzugsweise können mehrere kleinere Aussparungen in der Papierschicht vorhanden sein, die insbesondere kreisförmig oder oval ausgebildet sein können. Durch die Ausbildung von mehreren kleineren Aussparungen bleibt die Stabilität der Papierschicht erhalten, so dass es nicht zu einer Schwächung des Einschlagpapiers kommt. Gleichzeitig ist das Einschlagpapier dadurch an mehreren Stellen transparent, so dass der Inhalt auch im eingewickelten Zustand gut erkennbar ist, ohne dass darauf geachtet werden müsste, an welcher Stelle des Einschlagpapiers das zu verpackende Produkt platziert wird.

Um das Abziehen der Kunststoff-Folie zum Recyceln zusätzlich zu erleichtern, kann zumindest eine der Ecken des Randbereichs frei von Klebestellen sein. Die Papierschicht kann in diesem Fall eine optische Markierung im Bereich dieser freien Ecke aufweisen, so dass die freie Ecke für den Endkunden besonders einfach zu finden und zu greifen ist.

In einer besonders bevorzugten Ausführungsform kann die Papierschicht des Einschlagpapiers aus Recyclingfasern oder aus einem schnell nachwachsenden Rohstoff, insbesondere aus Gras, Heu oder Stroh bestehen oder zumindest einen solchen Rohstoff enthalten. Durch die Verwendung von Altmaterial oder schnell nachwachsenden Rohstoffen als Bestandteil des Papiermaterials des Einschlagpapiers kann der Ressourcenverbrauch weiter reduziert werden. Insbesondere bei Einmalprodukten und bei Massenprodukten können bereits geringe Einsparungen von Materialien einen wesentlichen Beitrag für die Zukunft der Erde liefern. Auch der Ersatz von Materialien durch umweltfreundlichere Materialien kann dazu entsprechen beitragen. Das erfindungsgemäße Einschlagpapier kann hierzu einen weiteren Schritt beitragen.

Weitere Vorteile und Merkmale der Erfindung sind den in den Ansprüchen ferner angegebenen Merkmalen sowie den nachstehenden Ausführungsbeispielen zu entnehmen.

### KURZE BESCHREIBUNG DER ZEICHNUNG

Die Erfindung wird im Folgenden anhand der in der Zeichnung dargestellten Ausführungsbeispiele näher beschrieben und erläutert. Es zeigen:
- Fig. 1: einen Querschnitt durch eine erste Ausführungsform des erfindungsgemäßen Einschlagpapiers mit aufgelegtem Produkt,
- Fig. 2: eine Draufsicht auf das Einschlagpapier gemäß Fig. 1 und
- Fig. 3: eine Draufsicht auf eine zweite Ausführungsform des erfindungsgemäßen Einschlagpapiers.

### WEGE ZUM AUSFÜHREN DER ERFINDUNG

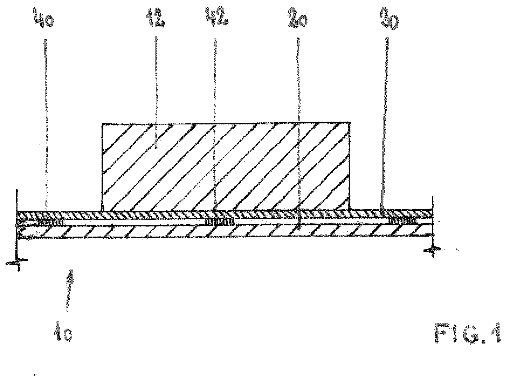

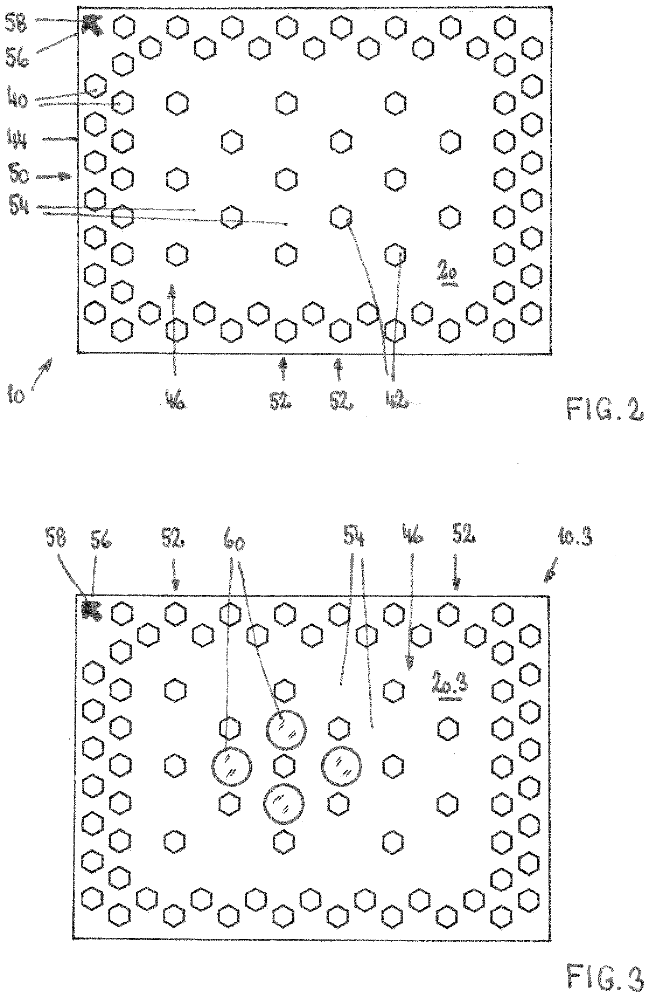

Die erste Ausführungsform des erfindungsgemäßen Einschlagpapiers 10 ist in den Fig. 1 und 2 dargestellt. Das Einschlagpapier 10 besitzt eine Papierschicht 20, bei der es sich in der Regel um die Unterseite des Einschlagpapiers 10 handelt. Darüber hinaus besitzt das Einschlagpapier 10 eine Kunststoff-Folie 30, die regelmäßig die Oberseite des Einschlagpapiers 10 bildet. Entsprechend wird ein zu verpackendes Lebensmittel 12, beispielsweise ein Stück Fleisch, eine Portion Frischwurst oder ein Stück Käse auf der Kunststoff-Folie 30 aufgelegt und dann in dem Einschlagpapier 10 verpackt.

Die Kunststoff-Folie 30 ist mittels mehrerer Klebestellen 40, 42 an der Papierschicht 20 befestigt. Die Klebestellen 40 sind dabei entlang des Randbereichs 44 des Einschlagpapiers 10 angeordnet. Die Klebestellen 42 sind im mittleren Bereich 46 des Einschlagpapiers 10 vorhanden und im vorliegenden Beispielsfall in Form von Reihen 50 und Spalten 52 angeordnet. Dadurch bilden sich Leerräume 54 im mittleren Bereich 46 des Einschlagpapiers 10, in denen keine Klebestellen 40, 42 vorhanden sind.

Im vorliegenden Beispielsfall ist in einer der vier Ecken 56 des Einschlagpapiers 10 keine Klebestelle 40, 42 vorhanden, so dass diese Ecke frei bleibt. Die Papierschicht 20 weist im Bereich dieser Ecke eine entsprechende optische Markierung 58 auf. Dadurch wird das Abziehen der Kunststoff-Folie 30 von der Papierschicht 20 vereinfacht.

Eine zweite Ausführungsform des erfindungsgemäßen Einschlagpapiers 10.3 ist in Fig. 3 dargestellt. Die Kunststoff-Folie 30 ist mittels mehrerer Klebestellen 40, 42 an der Papierschicht 20 befestigt.

Im mittleren Bereich 46.3 weist die Papierschicht 20.3 mehrere kreisförmige Aussparung en 60 auf. Diese Aussparungen 60 sind jeweils in Leerräumen 54 zwischen den Klebestellen 42 angeordnet.

Im vorliegenden Beispielsfall sind nicht in allen Leerräumen 54 entsprechende Aussparungen 60 vorgesehen. Im Gegensatz hierzu könnten auch mehr oder weniger der Leerräume 54 mit entsprechenden Aussparungen 60 versehen werden. Die Form der Aussparungen 60 ist dabei grundsätzlich beliebig. Es hat sich jedoch herausgestellt, dass kreisförmige oder ovale Aussparungen 60 vorteilhaft sind, da diese die Stabilität der Papierschicht 20 am wenigsten beeinträchtigen.

Die Anordnung der Klebestellen 42 im mittleren Bereich 46 des Einschlagpapiers 10, 10.3 kann grundsätzlich beliebig sein, solange mehrere Leerräume 54 gebildet werden. Auch die Anordnung der äußeren Klebestellen 40 kann sich von der in der Zeichnung dargestellten Ausführungsform unterscheiden. So können beispielsweise auch größere oder engere Abstände zwischen den Klebestellen 40 vorgesehen werden. Es wäre auch möglich, die Ränder des Einschlagpapiers 10, 10.3 mit einem durchgehenden Klebestreifen zu verkleben, während im mittleren Bereich 46 des Einschlagpapiers 10, 10.3 punktuelle Klebestellen vorgesehen werden.

## Patentansprüche

1. Einschlagpapier (10, 10.3) für Lebensmittel (12),
- mit einer Papierschicht (20, 20.3),
- mit einer Kunststoff-Folie (30), die lediglich bereichsweise über Klebestellen (40, 42) an der Papierschicht (20, 20.3) befestigt ist,
- **dadurch gekennzeichnet**,
- die Papierschicht (20, 20.3) eine Grammatur von weniger als 30 g/m² aufweist, insbesondere eine Grammatur von etwa 22 g/m²,
- die Kunststoff-Folie (30) eine Stärke von weniger als 6 µm aufweist, insbesondere eine Stärke von etwa 4 µm.

2. Einschlagpapier nach Anspruch 1,
- **dadurch gekennzeichnet, dass**
- Klebestellen (40) entlang des Randbereichs (44) des Einschlagpapiers (10, 10.3) angeordnet sind,
- im mittleren Bereich (46) des Einschlagpapiers (10, 10.3) weitere Klebestellen (42) vorhanden sind, die in einem sich wiederholenden Gittermuster angeordnet sind, so dass sich im mittleren Bereich (46) des Einschlagpapiers (10, 10.3) Leerräume (54) ohne Klebestellen (40, 42) bilden.

3. Einschlagpapier nach Anspruch 2,
- **dadurch gekennzeichnet, dass**
- die Klebestellen (42) im mittleren (46) Bereich reihen- beziehungsweise spaltenförmig angeordnet sind, so dass
- rechteckige Leerräume (54) im mittleren Bereich (46) des Einschlagpapiers (10, 10.3) bildbar sind.

4. Einschlagpapier nach Anspruch 2,
- **dadurch gekennzeichnet, dass**
- die Leerräume im mittleren Bereich (46) des Einschlagpapiers sechseckig ausgebildet sind.

5. Einschlagpapier nach einem der Ansprüche 1 bis 4,
- **dadurch gekennzeichnet, dass**
- die Papierschicht (20.3) im Bereich zumindest einer der Leerräume (54) des Einschlagpapiers (10.3) zumindest eine Aussparung (60) aufweist.

6. Einschlagpapier nach Anspruch 5,
- **dadurch gekennzeichnet, dass**
- die Papierschicht (20.3) mehrere Aussparungen (60) aufweist.

7. Einschlagpapier nach Anspruch 5 oder 6,
- **dadurch gekennzeichnet, dass**
- die zumindest eine Aussparung (60) kreisförmig oder oval ausgebildet ist.

8. Einschlagpapier nach einem der vorstehenden Ansprüche,
- **dadurch gekennzeichnet, dass**
- zumindest eine der Ecken (56) des Randbereichs (44) frei von Klebestellen (40) ist.

9. Einschlagpapier nach Anspruch 8,
- **dadurch gekennzeichnet, dass**
- die Papierschicht (20, 20.3) im Bereich der freien Ecke (56) eine optische Markierung (58) aufweist.

10. Einschlagpapier nach einem der vorstehenden Ansprüche,
- **dadurch gekennzeichnet, dass**
- die Papierschicht (20, 20.3) aus Recyclingfasern oder aus einem schnell nachwachsenden Rohstoff, insbesondere aus Gras, Heu oder Stroh, besteht oder zumindest einen solchen Rohstoff enthält.
